# EUROPEAN PATENT SPECIFICATION

(11) **EP 3 223 625 B1**
(45) Date of publication and mention of the grant of the patent: **27.04.2022**
(21) Application number: 15801262.5
(22) Date of filing: 17.11.2015
(51) Int. Cl.: A23K 10/30, A23K 20/22, A23K 40/25, A23K 50/40, A23K 50/42, A01K 15/02, A23K 40/20

(54) **LOW DENSITY EDIBLE ANIMAL CHEWS AND METHODS OF MAKING SAME**
KAUSPIELZEUG FÜR TIERE MIT NIEDRIGER DICHTE UND VERFAHREN ZUR HERSTELLUNG DAVON
ALIMENTS À MÂCHER POUR ANIMAUX COMESTIBLES À MASSE VOLUMIQUE FAIBLE ET LEURS PROCÉDÉS DE FABRICATION

(30) Priority: 24.11.2014 US 201462083567 P
(43) Date of publication of application: 04.10.2017
(73) Proprietor: Société des Produits Nestlé S.A., 1800 Vevey (CH)
(72) Inventor: MAHE, Yannick, F-80090 Amiens (FR); ALBUJA, Mario G., Eureka, Missouri 63025 (US)
(74) Representative: Elkington and Fife LLP
(86) International application number: PCT/IB2015/058896
(87) International publication number: WO 2016/083947

(56) References cited:
- EP-A1- 1 800 545
- EP-A1- 2 011 404
- EP-A1- 2 712 288
- EP-A2- 0 909 536
- EP-B1- 1 017 288
- EP-B1- 1 189 519
- EP-B1- 2 712 288
- WO-A1-2014/155113
- US-A1- 2008 102 165
- None

## Description

### BACKGROUND

The present disclosure relates generally to low density edible chews having a cellular matrix that provides sufficient bite depth to facilitate mechanical teeth cleaning and further relates to methods of making such chews. More specifically, the present disclosure is directed to edible chews having a low density and a smooth exterior surface that can be achieved by modifying an extrusion process.

Animal chew toys are designed to entertain the animal, combat boredom, prevent destructive chewing behavior, and provide an outlet for their innate chewing instinct. Generally, animal chew toys are made from plastic or other material that cannot be eaten by the animal. Animals typically tire of non-edible animal chew toys after a short period of time and move on to other activities. Moreover, non-edible animal chew toys provide no nutritional value to theA animal and are limited in providing a health benefit to the animal.

Edible chews have been developed, but they are based on expensive ingredients, mainly pre-gelatinized rice or corn, which have a negative impact on the manufacturing cost. Furthermore, known edible chews have relatively low dental efficacy (around 35-40 % tartar build up reduction) for two potential reasons: their limited thickness (the teeth do not penetrate very deeply into the chew before breakage) and their limited duration. WO2014/155113 relates to an edible animal chew comprising a starch content of 50 to 75 wt% relative to the total weight of the chew; a humectant content of 10 to 20 wt% relative to the total weight of the chew; and a density of 1.0g cm- or less. EP 0 909 536 relates to a dried pet food which is able to mechanically clean the teeth of pets when chewed. The dried pet food is based on a matrix of a denatured protein source and a gelatinised carbohydrate souce. EP 1 800 545 relates to methods for providing a digestible cohesive product of controllable texture and products so produced. EP 2 712 288 provides a longer-lasting edible anumal chew (1) having a longitudinal axis comprising: i) an outer wall (2) extending in the direction of said longitudinal axis; and ii) an internal support structure (4) that contacts the inner surface of said outer wall (2) at three or more points. EP 1 017 288 relates to a method described for forming dough product containing a filling. The method includes making projections on the surface of the dough product. The dough product with its projections attains a significant level of crispness upon frying, and retains the crispness upon reheating, even after a freeze/thaw cycle.

A low density chew could possibly require the animal teeth to penetrate deeply into the chew. However, to the best knowledge of the present inventors, there is no known solution to obtain highly performing and appealing low density chews, especially from formula based on pre-gelatinized starches. In this regard, the expansion of pre-gelatinized starches is difficult to monitor, and the final product shape is difficult to control. For example, the final product has a very rough surface and a burgeoning structure that is unsatisfactory. In this regard, standard extrusion dies with a smooth surface, whatever the shape, lead to an unappealing product surface with numerous blisters ("toad skin").

### SUMMARY

The present disclosure provides edible chews having a low density (e.g. about 1.0 Kg/L or less) and a smooth exterior surface. As a non-limiting example, the low density and the smooth exterior surface can be achieved by modifying an extrusion die to restrict surface bubbles. As another non-limiting example, the low density and the smooth exterior surface can be achieved by modifying the profile of an extruder screw to hold a dough longer therein, to create a whipping effect resulting in more bubble nucleation sites and hence a more uniform cellular matrix. In both of these examples, the effect can be enhanced by adding a bicarbonate such as sodium bicarbonate to produce smaller foam cells.

Accordingly, in a general embodiment, the present disclosure provides an edible pet chew comprising an expanded pre-gelatinized cereal flour matrix and having a substantially smooth exterior surface such that it is substantially free from undulations, blisters and bumps, and a density not greater than 1.0 Kg/L; and wherein the chew has a caloric density of 1.5-2.7 Kcal/cm³.

In an embodiment, the chew has a form of single unitary piece.

In an embodiment, the chew does not contain a supercritical fluid.

In an embodiment, the density is at most about 0.9 Kg/L.

In an embodiment, the chew comprises a body having a substantially cylindrical shape and comprises radial ridges extending from the body parallel to each other along at least a portion of the length of the body.

In another embodiment, the present disclosure provides a method of making an edible pet chew. The method comprises the steps of: preparing a dry mix comprising a pre-gelatinized cereal flour; metering the dry mix into an extruder comprising an extrusion die; adding a hydrogen bond-forming component to the dry mix to form a dough; promoting nucleation of the dough by subjecting the dough to a combination of shear and a temperature in a section of the extruder adjacent to the extrusion die to form a heated and sheared dough, the temperature in the section adjacent to the extrusion die is higher than a temperature of at least one previous section of the extruder; and directing the heated and sheared dough through an opening of the extrusion die comprising grooves, each of the grooves has an open end and a bottom surface opposite to the open end, and the width of the bottom surface is greater than the width of the open end.

In an embodiment, the grooves have a substantially triangular cross-section (dove-tail shape).

In an embodiment, the grooves have a width that continuously decreases as the grooves extend toward the center of the opening.

In an embodiment, the grooves are evenly spaced along an inner periphery of the opening of the extrusion die.

In an embodiment, the temperature in the section of the extruder adjacent to the extrusion die is at least 120 °C.

In an embodiment, the hydrogen bond-forming component comprises a polyhydric solvent.

In another embodiment, the present disclosure provides a method of making an edible pet chew. The method comprises the steps of: preparing a dry mix comprising a pre-gelatinized cereal flour and a bicarbonate; metering the dry mix into an extruder comprising an extrusion die; adding a hydrogen bond-forming component to the dry mix to form a dough; and promoting nucleation of the dough by subjecting the dough to a combination of shear and a temperature in a section of the extruder adjacent to the extrusion die to form a heated and sheared dough, the temperature in the section adjacent to the extrusion die is higher than a temperature of at least one previous section of the extruder.

In an embodiment, the bicarbonate is sodium bicarbonate. The dry mix can comprise 0.2 to 1.5 wt% of the sodium bicarbonate, for example 0.5 to 1.5 wt% of the sodium bicarbonate.

In another embodiment, the present disclosure provides a method of making an edible pet chew. The method comprises the steps of: preparing a dry mix comprising a pre-gelatinized (pre-gelled) cereal flour; metering the dry mix into an extruder comprising an extrusion die and a barrel comprising a vent and a vent-stuffer; adding a hydrogen bond-forming component to the dry mix to form a dough; using a reverse element of the extruder to extend a time spent by the dough in the barrel comprising the vent and the vent-stuffer; using mixing elements in the barrel comprising the vent and the vent-stuffer to whip the dough and promote nucleation; and promoting further nucleation of the dough by subjecting the dough to a combination of shear and a temperature in a section of the extruder adjacent to the extrusion die to form a heated and sheared dough, the temperature in the section of the extruder adjacent to the extrusion die is higher than a temperature of at least one previous section of the extruder. Extending the time spent by the dough in the first section can provide for a better whipping of the dough.

In an embodiment, the method comprises adding a bicarbonate to the dry mix.

In an embodiment, the method comprises aerating the dough in the barrel comprising the vent and the vent-stuffer.

In an embodiment, the vent and the vent-stuffer are configured to provide ambient pressure.

In another embodiment, the present disclosure provides a pet treat comprising: an edible pet chew comprising an expanded pre-gelatinized cereal flour matrix and having a substantially smooth exterior surface such that it is substantially free from undulations, blisters and bumps, and a density not greater than 1.0 Kg/L; and wherein the chew has a caloric density of 1.5-2.7 Kcal/cm³ and at least one filling. Preferably the at least one filling comprises radial sides surrounded by the edible pet chew.

In another embodiment, the present disclosure provides a non-therapeutic use of an edible pet chew or of a pet treat as described herein for cleaning teeth of a pet. In another embodiment, the present disclosure provides an edible pet chew as described herein for use in reducing plaque build up and/or reducing tartar build up on teeth of a pet.

An advantage of the present disclosure is to provide improved edible chews for pets.

Another advantage of the present disclosure is to provide improved methods of making edible chews for pets.

Still another advantage of the present disclosure is to provide edible pet chews that increase consumer appeal/credibility on a similar weight basis compared to existing chews, due to product volume.

Yet another advantage of the present disclosure is to produce edible pet chews at a reduced cost on a similar volume basis compared to existing chews.

Another advantage of the present disclosure is to provide edible pet chews having reduced calories on a similar volume basis compared to existing chews.

Still another advantage of the present disclosure is to provide increased feeding opportunities due to improved edible chew properties (e.g. low caloric density and good resistance to shear), leading to increased interactions between a dog and the owner of the dog.

Yet another advantage of the present disclosure is to provide edible pet chews that have improved dental efficacy on a similar weight basis compared to existing chews, due to an increased product thickness and a pumice structure.

Still another advantage of the present disclosure is to provide edible pet chews that have a low density and an aerated structure but nevertheless provide chewing properties on a similar weight basis as compared to normal high density chews.

Yet another advantage of the present disclosure is to produce edible pet chews that have a low density and thus provide an excellent volume impression, which may be used to reduce product weight and therefore raw material cost.

Another advantage of the present disclosure is to provide edible pet chews having a pumice structure that has a multi-blade effect that achieves a better teeth-cleaning and therefore a better reduction of tartar build up compared to existing chews.

Still another advantage of the present disclosure is to provide low density edible pet chews that have better a cosmetic impression than blistered chews, by having larger smooth surfaces.

Yet another advantage of the present disclosure is to produce edible pet chews that have a low density without using a supercritical fluid.

Another advantage of the present disclosure is to provide edible pet chews that have an alveolar structure without compromising resistance to shear.

Still another advantage of the present disclosure is to provide low density edible pet chews that have rubbery character.

Additional features and advantages are described herein, and will be apparent from the following Detailed Description and the Figures.

### BRIEF DESCRIPTION OF THE FIGURES

**FIGS. 1-5** are photographs of the edible pet chews made in the experimental examples disclosed herein.
**FIG. 6** is a front plan view of an embodiment of an extrusion die provided by the present disclosure.
**FIGS. 7A** and **7B** are photographs of an edible pet chew made by the embodiment of an extrusion die shown in **FIG. 6****.**
**FIG. 8** is a photograph of an embodiment of an edible pet chew made using a star-shaped insert according to the present disclosure.
**FIG. 9A** is a photograph of an embodiment of a device for making an edible pet chew comprising a filling according to the present disclosure.
**FIG. 9B** is front plan view of an embodiment of an extrusion die that can be used in the device shown in **FIG. 9A****.**
**FIGS. 9C** and **9D** are photographs of an edible pet chew made by the embodiment of the device shown in **FIG. 9A** and the embodiment of an extrusion die shown in **FIG. 9B****.**
**FIGS. 10A** and **10B** are photographs of differently-shaped embodiments of edible pet chews according to the present disclosure.
**FIG. 11** is a close-up photograph of the cellular texture of an embodiment of an edible pet chew according to the present disclosure.

### DETAILED DESCRIPTION

As used in this disclosure and the appended claims, the singular forms "a," "an" and "the" include plural referents unless the context clearly dictates otherwise. Thus, for example, reference to "a meat" includes two or more meats. The term "and/or" used in the context of "X and/or Y" should be interpreted as "X," or "Y," or "X and Y."

As used herein, "about" and "substantially" are understood to refer to numbers in a range of numerals, for example the range of -10% to +10% of the referenced number, preferably within -5% to +5% of the referenced number, more preferably within -1% to +1% of the referenced number, most preferably within -0.1% to +0.1% of the referenced number. Furthermore, all numerical ranges herein should be understood to include all integers, whole or fractions, within the range. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

All percentages expressed herein are by weight of the total weight of the composition unless expressed otherwise. When reference is made to the pH, values correspond to pH measured at 25 °C with standard equipment. "Ambient pressure" is about 100 kPa.

The term "pet" means any animal which could benefit from or enjoy the compositions provided by the present disclosure. For example, the pet can be an avian, bovine, canine, equine, feline, hicrine, lupine, murine, ovine, or porcine animal, but the pet can be any suitable animal. The term "companion animal" means a dog or a cat.

The terms "food," "food product" and "food composition" mean a product or composition that is intended for ingestion by an animal, including a human, and provides at least one nutrient to the animal. The term "pet food" and "pet treat" mean any food composition intended to be consumed by a pet. The term "edible chew" means a comestible product that requires a longer chewing time before the product can be ingested, relative to a standard comestible product. Preferably the edible chew requires at least one minute of chewing before the product can be ingested, for example one to four minutes of chewing before the product can be ingested. A "smooth surface" of the chew means a surface that is substantially free from undulations, blisters and bumps.

"Dry food" is pet food having a water activity less than 0.75. "Semi-moist food" and "intermediate moisture food" is pet food having a water activity from 0.75 to 0.85. "Wet food" is pet food having a water activity more than 0.85.

The compositions disclosed herein may lack any element that is not specifically disclosed herein. Thus, a disclosure of an embodiment using the term "comprising" includes a disclosure of embodiments "consisting essentially of' and "consisting of' the components identified. Similarly, the methods disclosed herein may lack any step that is not specifically disclosed herein. Thus, a disclosure of an embodiment using the term "comprising" includes a disclosure of embodiments "consisting essentially of' and "consisting of' the steps identified.

In an aspect of the present disclosure, an edible pet chew having a low density and a smooth exterior surface is provided. For example, the edible pet chew can have a density of 0.5 Kg/L to 1.0 Kg/L, for example 0.5 Kg/L to about 0.9 Kg/L, such as about 0.9 Kg/L. In some embodiments, the edible pet chew has a density of about 0.5 Kg/L or less, such as about 0.5 Kg/L. The edible pet chew preferably is a single unitary piece that is substantially homogenous and has substantially the same texture throughout. In an embodiment, the chew has a caloric density of 1.5 Kcal/cm³ to 2.7 Kcal/cm³, for example about 2.1 Kcal/cm³. An edible chew typically has a water activity of 0.65 to 0.75, but some embodiments of the edible pet chews disclosed herein have a slightly lower water activity, for example 0.6 to 0.7.

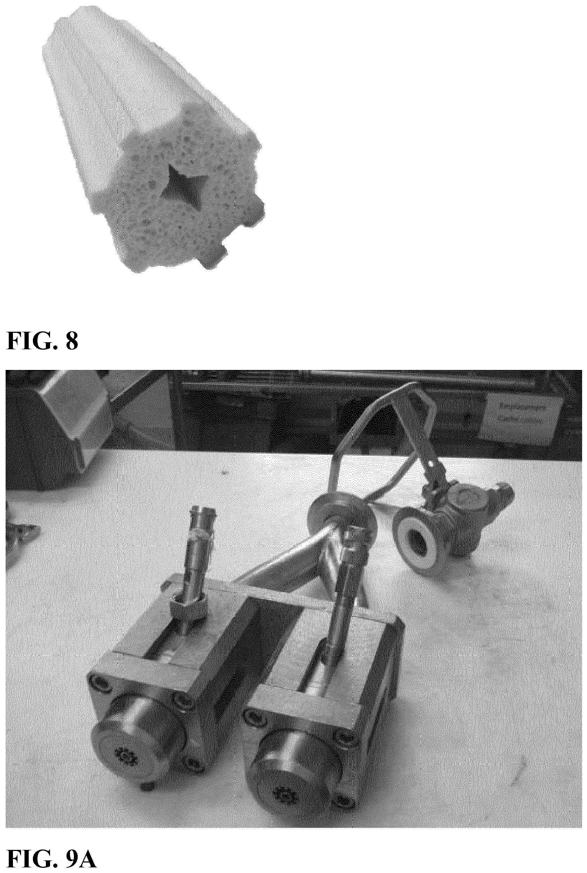

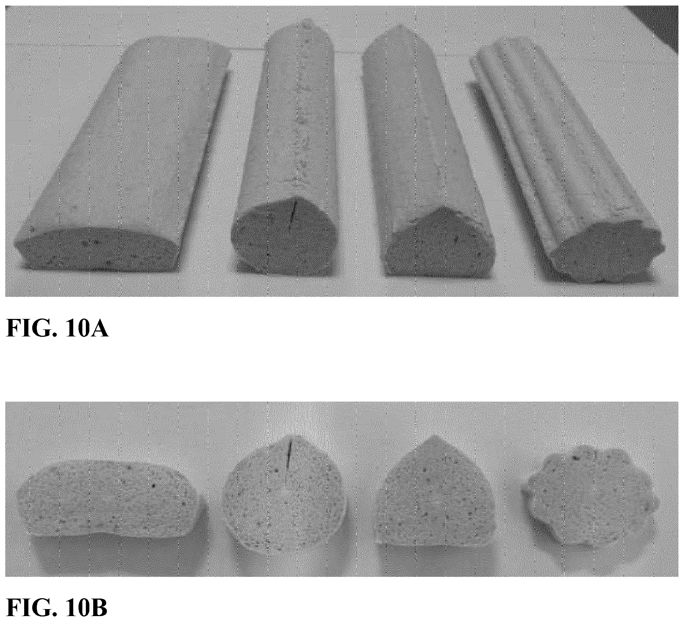

In an embodiment, the chew comprises a body having a substantially cylindrical shape and comprises radial ridges extending from the body parallel to each other along at least a portion of the length of the body, for example an entire length of the body (e.g. the embodiment shown in **FIG. 8**). However, the edible pet chew can have any shape (e.g. the embodiments shown in **FIG. 10**), and the edible pet chew is not limited to a specific shape.

In another aspect of the present disclosure, a pet treat is provided comprising the edible chew and one or more fillings therein. For example, the pet treat can be a co-extruded product comprising the edible chew and a soft filling surrounded at least on radial sides by the edible chew (e.g. the filling can be exposed at the ends of the chew). The filling may contain additional teeth cleaning compounds, such as Tetrasodium Pyrophosphate (TSPP) and/or breath-freshening compounds.

In yet another aspect of the present disclosure, a method of making an edible pet chew is provided. The method can comprise using a dry mix by mixing pre-gelatinized cereal flour to form a dry mix. Non-limiting examples of suitable pre-gelatinized cereal flours include pre-gelatinized rice flour, pre-gelatinized wheat flour, pre-gelatinized corn flour, pre-gelatinized barley flour, pre-gelatinized sorghum flour, and pre-gelatinized millet flour, and combinations thereof. Optionally the dry mix can include other components in addition to the pre-gelatinized cereal flour, such as one or more of a protein source, vitamin, a mineral, a preservative, an antioxidant, a colorant, a palatant, or a flavorant. Preferably the method of making an edible pet chew does not involve using a supercritical fluid.

Non-limiting examples of suitable vitamins include vitamin A, any of the B vitamins, vitamin C, vitamin D, vitamin E, and vitamin K, including various salts, esters, or other derivatives of the foregoing. Non-limiting examples of suitable minerals include calcium, phosphorous, potassium, sodium, iron, chloride, boron, copper, zinc, magnesium, manganese, iodine, selenium, and the like. In a particularly preferred embodiment, calcium hydrogen phosphate can be used as a calcium source. Non-limiting examples of suitable preservatives include potassium sorbate, sorbic acid, sodium methyl para-hydroxybenzoate, calcium propionate, propionic acid, and combinations thereof. The antioxidant can provide an aesthetic effect and influence the odor of the edible pet chew, particularly during extended shelf-life. Non-limiting examples of suitable antioxidants include butylated hydroxyanisole (BHA), butylated hydroxytoluene (BHT), vitamin E (tocopherols), and combinations thereof. Non-limiting examples of suitable colorants include FD&C colors, such as blue no. 1, blue no. 2, green no. 3, red no. 3, red no. 40, yellow no. 5, yellow no. 6, and the like; natural colors, such as roasted malt flour, caramel coloring, annatto, chlorophyllin, cochineal, betanin, turmeric, saffron, paprika, lycopene, elderberry juice, pandan, butterfly pea and the like; titanium dioxide; and any suitable food colorant known to the skilled artisan. Non-limiting examples of suitable palatants flavorants include yeast, tallow, rendered animal meals (e.g., poultry, beef, lamb, and pork), flavor extracts or blends (e.g., grilled beef), animal digests, and the like.

The dry mix can contain emulsifiers and stabilizers such as soy lecithin, mono- and di-glycerides, and the like. In an embodiment, the composition does not contain any lipids, and/or the emulsifier is the only lipid in the composition. Meat flours can be added to the dry mix and would be a source of lipids. Chicken fat can be used to reduce stickiness if needed, although higher temperature may be required to achieve the same expansion relative to a composition lacking chicken fat. In an embodiment, any protein from the pre-gelatinized starch is the only protein in the composition. Some other protein sources might be used for substantiation of nutritional claims (e.g. meat meals, greaves meals, etc.), the addition level being appropriate not to prevent expansion.

A component capable of forming hydrogen bonds in the pre-gelatinized cereal flour can be added to the dry mix to form dough that is dynamically cooked in an extruder. The component capable of forming hydrogen bonds is preferably added to the dry mix in the extruder. The component can comprise a polyhydric solvent which is preferably non-aqueous and preferably ethylene glycol, propylene glycol, glycerol or a combination thereof. Water and/or an additional preservative may also be added to the dry mix. In an embodiment, the water content may be from 7.5% to 11.9%, the glycerin content may be from 13.4% to 17.9%, and the amount of the dry mix may be from 71.4% to 78.1% of the flour.

In the extruder, the dough constituents can mix with each other while shear is imparted within the extruder barrel. Preferably the extruder has a plurality of successive barrels, and the temperature increases in one or more of the barrels adjacent the die through which the cooked dough exits, relative to the prior barrels. For example, the barrel at the exit end of the extruder can be heated to a temperature of about 120 °C, and one or more of the prior barrels can be heated to a temperature of about 80 °C. The temperature increase at the exit end of the extruder can cause sudden and extensive formation of gas in the dough, resulting in expansion of the dough at both a microscopic and macroscopic level as bubbling gas attempts to escape the material.

As a non-limiting example, the initial barrels (e.g. the 6 first barrels) are not heated, for example by having the temperature therein set to around 25 °C, although the temperature of these barrels is not necessarily the set temperature because the cooling capacity is not always sufficient. The temperature of the last barrels (e.g. the last four barrels) may be 80-120 °C for low product throughput (100-150 kg/h) and may be lower for higher throughput (high shearing due to screw speed). Moreover, the temperature of the last barrels can be lower if the last part of the screw profile therein is stronger. The average pressure at the front plate can be about 75 bars at 115 kg/h on a one rope die; higher pressure (e.g. about 95 bars) can be reached at higher throughput 400 kg/h on a four rope die. The average SME value can be 400-450 KJ/kg on dry basis.

In a first embodiment, a low density (a density of about 0.7 Kg/L or less, such as about 0.7 Kg/L) and a smooth exterior surface of the edible pet chew can be achieved by at least one of the following: (i) a specific design of the extrusion die or (ii) addition of a bicarbonate such as sodium bicarbonate to the dry mix. In this first embodiment, the extruded material is aerated; if the extruded material is not aerated, the density will be around 1.2-1.3 kg/L. Preferably, a venting barrel is not used. In this first embodiment, the expansion can be primarily in a radial direction.

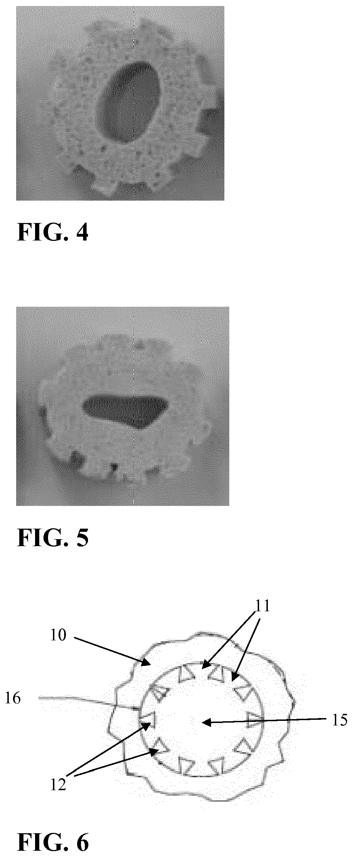

**FIG. 6** generally illustrates an embodiment of an extrusion die 10 that can achieve a low density and a smooth exterior surface of the edible pet chew. The extrusion die 10 can comprise dovetail grooves 11 through which the material is extruded. For example, the extrusion die 10 can comprise an opening 15, and the dovetail grooves 11 can be formed in the inner periphery 16 of the opening 15. Each of the dovetail grooves 11 has an open end and a bottom surface that is opposite to the open end.

The dovetail grooves 11 each have an inner width and an outer width that are perpendicular to the direction of extrusion (i.e. the longitudinal axis of the extruder), the inner width is closer to the center of the opening 15, and each of the inner widths is shorter than the corresponding outer width. The center of the opening 15 is preferably on the longitudinal axis of the extruder. The inner width is the width of the open end of the dovetail groove 11, and the outer width is the width of the bottom surface of the dovetail groove 15.

Preferably each of the dovetail grooves 11 have a substantially triangular cross-sectional shape; for example, the width of each the dovetail grooves 11 can continuously increase as the dovetail grooves 11 extend outward relative to the center of the opening 15. In an embodiment where the opening 15 is circular, the open ends of the dovetail grooves 15 can be positioned along a first circumference, and the bottom surfaces of the dovetail grooves 15 can be positioned along a second circumference concentric with the first circumference but larger than the first circumference.

In an embodiment, the dovetail grooves 11 can be formed by projections 12 that extend inward from the inner periphery 16 of the opening 15. The inner widths of the projections 12 can be positioned on the same first circumference as the inner widths of the dovetail grooves 11, the outer widths of the projections 12 can be positioned on the same second circumference as the outer widths of the dovetail grooves 11, and each of the outer widths of the projections 12 can be shorter then the corresponding inner width of the projection 12. The figure shows ten of the dovetail grooves 11 and ten of the projections 12, but any number can be used, and the extrusion die 10 is not limited to a specific number of the dovetail grooves 11 and the projections 12.

Without being bound by theory, the inventors believe that known dies with little straight grooves all around give a product with alternating smooth and blistered surfaces, the smooth surfaces corresponding to the external part of the grooves. The inventors believe that the flow inside the grooves is slightly reduced, resulting in lower pressure, which prevents the development of steam bubbles as extensively as in the die core (less "flashing"). Replacing straight and narrow grooves with large dovetail grooves provides a product with a better cosmetic impression, due to the smooth surface being larger.

Additionally or alternatively to using an extrusion die comprising dovetail grooves, a bicarbonate such as sodium bicarbonate can be included in the dry mix. For example, the dry mix can comprise 0.2 to 1.5 wt% sodium bicarbonate, for example 0.5 to 1.5 wt% sodium bicarbonate. Without being bound by theory, the inventors believe that the carbon dioxide released from the bicarbonate submitted to heat and/or acid promote nucleation (more nucleation sites) and helps to decrease the size of the foam cells that form in the material during extrusion.

In a second embodiment, a low density (a density of about 1.0 Kg/L or less, such as about 1.0 Kg/L, or even about 0.9 Kg/L or less, such as about 0.9 Kg/L) and a smooth exterior surface of the edible pet chew can be achieved by incorporating air into the dough during extrusion to aerate the dough. In this second embodiment, the expansion can be primarily in a radial direction, although the use of a bicarbonate such as sodium bicarbonate can result in combined axial and radial expansion in this embodiment.

In this embodiment, the extruder can comprise a barrel comprising a vent that is open to the atmosphere and comprising a vent-stuffer, and the dough in the venting barrel must be viscous enough to entrap air. A reverse element can be positioned after the venting barrel to maintain the dough for an extended period of time in the venting barrel. The reverse element can be a reverse screw element or any element that generates backpressure in the extruder. The extended period of time spent by the dough in the venting barrel in the presence of the mixing elements therein can ensure an efficient mixing and/or whipping of the dough. The vent in the venting barrel that is open to the atmosphere can allow air to penetrate into the extruder and push the dough, potentially coming through the vent, back into the extruder. However, in a preferred embodiment, forced gas injection is not used.

This "whipping" process promotes nucleation such that a very foamy and light dough is obtained. The phenomenon is visible right after the front plate, on the opposite of the previous alternatives where the bubbles mainly grow at the die exhaust. Because of the very tiny bubble size, product surface is very smooth and product shape perfectly defined.

Addition of a bicarbonate such as sodium bicarbonate to the dry mix can increase the nucleation even further. The density may thus be even lighter (about 0.7 Kg/L or less, such as about 0.7 Kg/L) and, in some conditions, the bubbles may be hardly visible even though the density is reduced by more than 50% relative to commercial edible pet chews.

In the first and second embodiments, as well as any other embodiments used to make the edible pet chew, the edible chew can be used in a pet treat in which the edible chew surrounds one or more fillings. Each of the one or more fillings may contain teeth cleaning compounds, such as Tetrasodium Pyrophosphate (TSPP) and/or or breath-freshening compounds. In an embodiment, at least one of the edible pet chew or the filling comprises a probiotic micro-organism. The one or more fillings can extend parallel to the radial ridges of the edible pet chew.

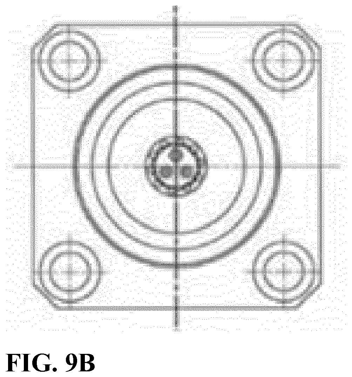

The pet treat can be made by co-extruding the edible pet chew and the one or more fillings. For example, as generally shown in FIG. 9B, one or more filling ports (internal inserts) can be inserted in the chew inserts (external insert); the distance between the internal inserts and the distance between the internal inserts and the external insert are large enough to allow the chew dough to circulate without any preferred flow; the section of the internal inserts should be large enough to avoid too high pressure.

### EXAMPLES

By way of example and not limitation, the following examples are illustrative of embodiments of the present disclosure.

### Example 1

Ingredients for a 500 Kg batch of Dry Mix were weighed out according to the percentages shown in Table 1 into a batch mixer and blended for five minutes. Although pre-gelled corn flour was used, additionally or alternatively any pre-gelled cereal flour can be used.

The Dry Mix was metered into an Evolum EV53 (Clextral) twin screw extruder along with the glycerin/phosphoric acid mixture and water in the proportions shown in Table 1 and equaling 115 Kg/hour, where they were mixed under pressure (64 bars) and achieved a temperature of 117 °C to form a plastic dough. Phosphoric acid is not required but was included for additional preservative effect.

**Table 1**

| | Ingredients | **Amount** (%) |
|---|---|---|
| DRY MIX | Pregelled Corn Flour | 83.58 |
| | Wheat Flour | 6.0 |
| | Brewer's Dried Yeast | 3.0 |
| | Calcium Hydrogen Phosphate | 3.0 |
| | Distilled Monoglyceride | 1.5 |
| | Vitamin Premix | 1.5 |
| | Potassium Sorbate | 0.6 |
| | Titanium Dioxide | 0.4 |
| | Calcium Propionate | 0.4 |
| | BHT Powder | 0.02 |
| | TOTAL | 100 |
| | | |
| EXTRUSION | Dry Mix | 73.9 |
| | Glycerin/Phosphoric Acid (16:1) | 16.3 |
| | Water | 9.8 |
| | TOTAL | 100 |

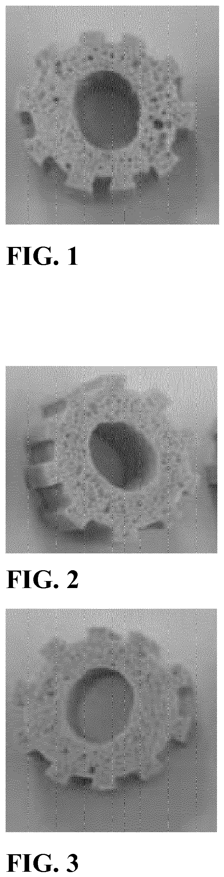

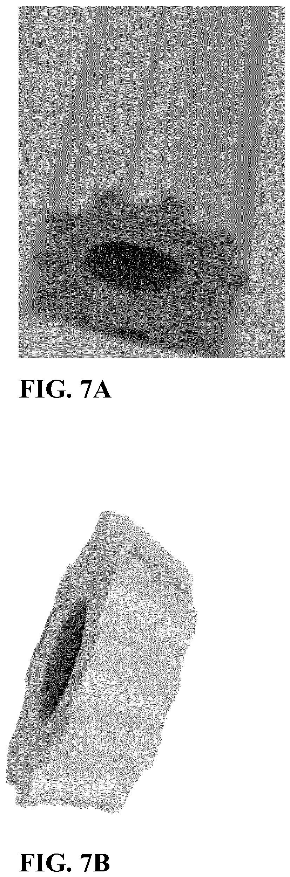

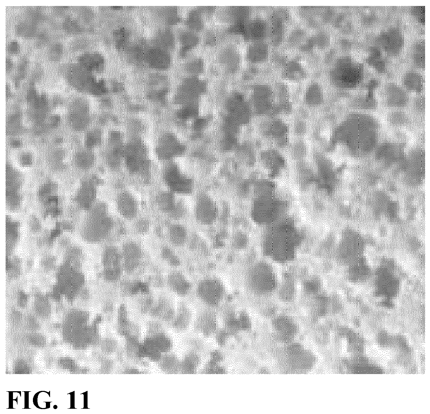

The extruder was equipped with 10 barrel sections and had an L/D ratio of 40. To achieve moderate shearing, one reversing screw element was inserted at the end of the fourth barrel, and two such elements were inserted at the end of the fifth barrel. The screws turned at 140 rpm and attained a specific mechanical energy (SME) of 430 KJ/Kg dry materials input. Barrels 7-10 were heated. The plastic dough was then extruded through a die system with opening shown in **FIG. 6** and cut into 120 mm long dense pieces having a density of 0.9 Kg/L (**FIG. 1**). The die with dovetail design (**FIG. 6**) was found to avoid a blistered, rough outer surface and produce an acceptably smooth outer surface (**FIG. 7A** and **7B**), and the edible chew had an expanded cellular internal structure (**FIG. 11**). Moreover, a single tubular insert was inserted within the die opening to form a hollow part in the product piece (**FIG. 1**).

Although the single insert was cylindrical, the insert can be any shape, such as triangular, rectangular, polygonal, star-shaped, or the like, to form a corresponding cross-sectional shape of the hollow part of the chew; **FIG. 8** depicts an embodiment of the edible pet chew made using a star-shaped insert. Furthermore, although the die was cylindrical, the die can be any symmetrical or non-symmetrical shape to form a corresponding cross-sectional shape of the body of the chew, as shown in **FIGS. 10A** and **10B****.**

### Example 2

Example 1 was repeated with the following exceptions. 0.5% sodium bicarbonate was added to the dry mix shown in Table 1 and the pre-gelled corn flour was reduced accordingly to 83.08%. The maximum pressure and SME were 67 bars and 447 KJ/Kg respectively. The plastic dough was then extruded through a die system with opening shown in **FIG. 6** and cut into 120 mm long pieces having a density of 0.74 Kg/L and with an expanded cellular internal structure (**FIG. 2**). The die with dovetail design (**FIG. 6**) was found to avoid a blistered, rough outer surface and produce an acceptably smooth outer surface. Moreover, a single tubular insert was inserted within the die opening to form a hollow part in the product piece (**FIG. 2**).

### Example 3

Example 2 was repeated with the following exceptions. 1% sodium bicarbonate was added to the dry mix shown in Table 1 and the pre-gelled corn flour was reduced accordingly to 82.58%. The maximum pressure and SME were 67 bars and 452 KJ/Kg respectively. The plastic dough was then extruded through a die system with opening shown in **FIG. 6** and cut into 120 mm long pieces having a density of 0.68 Kg/L and with an expanded cellular internal structure (**FIG. 3**). The die with dovetail design (**FIG. 6**) was found to avoid a blistered, rough outer surface and produce an acceptably smooth outer surface. Moreover, a single tubular insert was inserted within the die opening to form a hollow part in the product piece (**FIG. 3**).

### Example 4

Example 3 was repeated with the following exceptions. 0.25% sodium bicarbonate was added to the Dry Mix as shown in Table 2. The Dry Mix was metered at 230 Kg/hr into an Evolum EV 53 (Clextral) twin screw extruder along with glycerin and water in proportions shown in Table 2. The screw speed, maximum pressure, temperature, and SME were 350 rpm, 90 bars, 113°C, and 530 KJ/Kg respectively. The plastic dough was then extruded through a die system with opening shown in **FIG. 6** and cut into 130 mm long pieces having a density of 0.76 Kg/L and with an expanded cellular internal structure (**FIG. 3**). The die with dovetail design **(****FIG. 6**) was found to avoid a blistered, rough outer surface and produce an acceptably smooth outer surface. Moreover, a single tubular insert was inserted within the die opening to form a hollow part in the product piece (**FIG. 3**).

**Table 2**

| | Ingredients | **Amount** (%) |
|---|---|---|
| DRY MIX | Pregelled Corn Flour | 79.80 |
| | Wheat Flour | 6.39 |
| | Calcium Hydrogen Phosphate | 4.86 |
| | Brewer's Dried Yeast | 3.00 |
| | Distilled Monoglyceride | 1.50 |
| | Chicken by product | 1.45 |
| | Vitamin Premix | 0.89 |
| | Roasted malt flour | 0.80 |
| | Potassium Sorbate | 0.60 |
| | Calcium Propionate | 0.41 |
| | Sodium bicarbonate | 0.25 |
| | Silicium dioxide | 0.03 |
| | BHT Powder | 0.02 |
| | TOTAL | 100 |
| | | |
| EXTRUSION | Dry Mix | 75.7 |
| | Glycerin | 14.0 |
| | Water | 10.3 |
| | TOTAL | 100 |

### Example 5

Example 1 was repeated with the following exceptions. The screw profile was modified for high shear. To achieve this high shear, an additional reversing screw element was inserted at the head of the seventh barrel. To allow air incorporation, a vent-stuffer was inserted on the sixth barrel, and two mixing elements were inserted in the middle of the sixth barrel below the vent-stuffer. The maximum pressure and SME were 66 bars and 475 KJ/Kg respectively. The plastic dough was then extruded through a die system with opening shown in **FIG. 6** and cut into 120 mm long pieces having a density of 0.67 Kg/L and with an expanded cellular internal structure (**FIG. 4**). The die with dovetail design (**FIG. 6**) was found to avoid a blistered, rough outer surface and produce an acceptably smooth outer surface. Moreover, a single tubular insert was inserted within the die opening to form a hollow part in the product piece (**FIG. 4**).

### Example 6

Example 4 was repeated with the following exceptions. 0.5% sodium bicarbonate was added to the dry mix shown in Table 1 and the pre-gelled corn flour was reduced accordingly to 83.08%. The maximum pressure and SME were 62 bars and 450 KJ/Kg respectively. The plastic dough was then extruded through a die system with opening shown in **FIG. 6** and cut into 120 mm long pieces having a density of 0.51 Kg/L and with an expanded fine cellular internal structure (**FIG. 5**). The die with dovetail design (**FIG. 6**) was found to avoid a blistered, rough outer surface and produce an acceptably smooth outer surface. Moreover, a single tubular insert was inserted within the die opening to form a hollow part in the product piece (**FIG. 5**).

### Example 7

Ingredients for a 909 Kg batch of Dry Mix were weighed out according to the percentages shown in Table 3 into a batch mixer and blended. The Dry Mix was metered into a Single Screw Extruder equipped with a pre-conditioner along with the glycerin, water and phosphoric acid in the proportions shown in Table 3, where they were mixed under pressure (60 bars) and achieved a temperature of 110 °C to form a plastic dough.

**Table 3**

| | Ingredients | **Amount** (%) |
|---|---|---|
| DRY MIX | Pregelled Corn Flour | 73.86 |
| | Wheat Flour | 17.10 |
| | Monocalcium-Dicalcium Phosphaste | 1.00 |
| | Distilled Monoglyceride | 1.80 |
| | Chicken by product meal | 2.50 |
| | Sorbic acid | 0.50 |
| | Roasted malt flour | 2.58 |
| | Calcium Propionate | 0.33 |
| | Soidum bicarbonate | 0.30 |
| | BHA/BHT Powder | 0.03 |
| | TOTAL | 100 |
| | | |
| EXTRUSION | Dry Mix | 76.38 |
| | Glycerin | 11.46 |
| | Water | 11.22 |
| | Phosphoric acid | 0.94 |
| | TOTAL | 100 |

The extruder was equipped to achieve shearing in the last section of the screw. The screw turned at 50 - 100 rpm. Temperature of the barrel of the screw was controlled. The plastic dough was then extruded through a die system with opening shown in **FIG. 6** and cut into 127 mm long pieces having a porous structure (**FIG. 1**) and density 0.9 Kg/L. The die with dovetail design (**FIG. 6**) was found to avoid a blistered, rough outer surface and produce an acceptably smooth outer surface (**FIG. 7A** and **7B**), and the edible chew had an expanded cellular internal structure (**FIG. 11**).

### Example 8

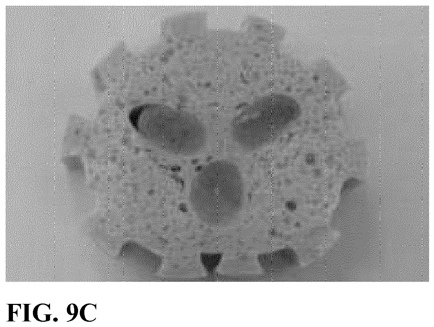

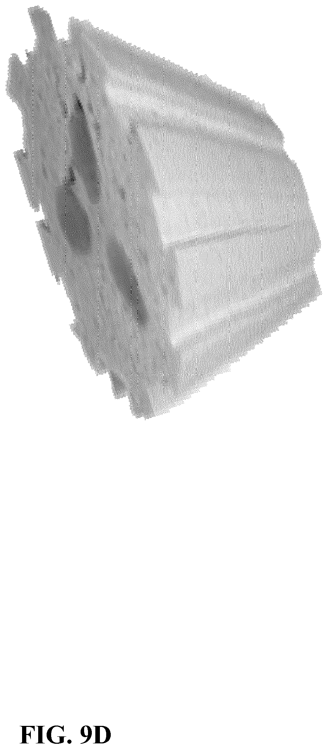

For variation, multiple tubular inserts (**FIG. 9B**) were inserted within the die opening to form several hollow parts in the product piece (**FIGS. 9C** and **9D**). The hollow sections were filled with a functional dough or paste using a system having a co-filling port (**FIG. 9A**).

### Example 9

A dental efficacy test was carried out with products made according to Example 4 with star-shaped hollow pieces of weight 26g (Experimental) and compared with a commercial dental product (Commercial) with similar ingredients that was not expanded (puffed). The following test protocol was employed:
16 medium dogs selected (good health and have none of the considered teeth missing)
Testing - crossover design: each dog was submitted to control diet (wet food) and experimental diet (wet food + 1 dental stick)
1 stick of 26 g represented 10% of the daily energy intake for a medium dog
Preliminary phase: 1 week adaptation to allow dogs to get accustomed to dental product
Followed by teeth cleaning and polishing / weight control
1st phase: for 28 days, group 1 (8 dogs) received control diet and group 2 (8 dogs) received experimental diet
Gingival index, plaque & tartar development scoring was done on considered teeth and followed up with teeth cleaning and polishing
2nd phase: for the next 28 days, group 1 (8 dogs) received experimental diet and group 2 (8 dogs) received control diet
Gingival index, plaque & tartar development scoring on considered teeth / teeth cleaning and polishing
This procedure was repeated with 26 g pieces of the commercial dental product.

Statistical analyses were carried out on both sets of data, and the results are shown in Table 4.

**Table 4**

| | Gingival Score | Plaque Score | | Tartar Score | | | Calorie Density |
|---|---|---|---|---|---|---|---|
| | Average gingivitis score reduction | % of dogs with a positive reduction of plaque buildup | Average plaque buildup reduction score | Highest tartar build up reduction score recorded | % of dogs with a positive reduction of tartar build up | Average tartar build up reduction score | Kcal/cm³ |
| Commercial Product | NS | 62.50% | 10.90% | 57.60% | 86.70% | 32.70% | 3.6 |
| Experimental Product | 19.00% | 81.20% | 18.40% | 70.00% | 100.00% | 52.40% | 2.1 |

From these results, it is clearly seen that the puffed (expanded) product had better dental cleaning scores than a current unexpanded similarly formulated commercial dental product.

## Claims

1. An edible pet chew comprising an expanded pre-gelatinized cereal flour matrix and having a substantially smooth exterior surface such that it is substantially free from undulations, blisters and bumps, and a density not greater than 1.0 Kg/L; and wherein the chew has a caloric density of 1.5-2.7 Kcal/cm³.

2. The edible pet chew of Claim 1 wherein the chew comprises a body having a substantially cylindrical shape and comprises radial ridges extending from the body parallel to each other along at least a portion of the length of the body.

3. The edible pet chew of claim 1, wherein the chew further comprises at least one filling comprising radial sides surrounded by the edible pet chew.

4. A method of making an edible pet chew, the method comprising the steps of:
preparing a dry mix comprising a pre-gelatinized cereal flour;
metering the dry mix into an extruder comprising an extrusion die;
adding a hydrogen bond-forming component to the dry mix to form a dough;
promoting nucleation of the dough by subjecting the dough to a combination of shear and a temperature in a section of the extruder adjacent to the extrusion die to form a heated and sheared dough, the temperature in the section adjacent to the extrusion die is higher than a temperature of at least one previous section of the extruder; and
directing the heated and sheared dough through an opening of the extrusion die comprising grooves, each of the grooves has an open end and a bottom surface opposite to the open end, and the width of the bottom surface is greater than the width of the open end.

5. The method of Claim 4 wherein the grooves have substantially triangular cross-section.

6. The method of Claim 4 wherein the grooves have a width that continuously decreases as the grooves extend toward the center of the opening.

7. The method of Claim 4 wherein the grooves are evenly spaced along an inner periphery of the opening of the extrusion die.

8. The method of Claim 4 wherein the temperature in the section of the extruder adjacent to the extrusion die is at least 120 °C.

9. The method of Claim 4 wherein the hydrogen bond-forming component comprises a polyhydric solvent.

10. A method of making an edible pet chew, the method comprising the steps of:
forming a dry mix comprising a pre-gelatinized cereal flour;
metering the dry mix into an extruder comprising an extrusion die and a barrel comprising a vent and a vent-stuffer;
adding a hydrogen bond-forming component to the dry mix to form a dough;
using a reverse element of the extruder to extend a time spent by the dough in the barrel comprising the vent and the vent-stuffer;
using mixing elements in the barrel comprising the vent and the vent-stuffer to whip the dough and promote nucleation of the dough; and
promoting further nucleation of the dough by subjecting the dough to a combination of shear and temperature in a section of the extruder adjacent to the extrusion die to form a heated and sheared dough, the temperature in the section adjacent to the extrusion die is higher than a temperature of at least one previous section of the extruder.

11. The method of Claim 4 or of claim 10, wherein the method comprises adding bicarbonate to the dry mix wherein the dry mix comprises 0.2 to 1.5 wt% of the sodium bicarbonate.

12. The method of Claim 10 comprising aerating the dough in the barrel comprising the vent and the vent-stuffer.

13. A pet treat comprising:
an edible pet chew according to any of the claims 1 to 3; and one or more fillings.

14. Non-therapeutic use of an edible pet chew according to any of claims 1 to 3 or of a pet treat of claim 13 for cleaning teeth of a pet.

15. An edible pet chew according to any of claims 1 to 3 or a pet treat of claim 13 for use in reducing tartar build up on teeth of a pet

## Patentansprüche

1. Essbarer Kauartikel für Haustiere, der eine expandierte, vorgelatinierte Getreidemehlmatrix umfasst und eine im Wesentlichen glatte Außenoberfläche aufweist, so dass er im Wesentlichen frei von Wellen, Blasen und Beulen ist, und eine Dichte von nicht mehr als 1,0 kg/l aufweist; und wobei der Kauartikel eine Kaloriendichte von 1,5 bis 2,7 kcal/cm³ hat.

2. Essbarer Kauartikel für Haustiere nach Anspruch 1, wobei der Kauartikel einen Körper mit einer im Wesentlichen zylindrischen Form und radiale Grate umfasst, die sich von dem Körper parallel zueinander entlang zumindest eines Teils der Länge des Körpers erstrecken.

3. Essbarer Kauartikel für Haustiere nach Anspruch 1, wobei der Kauartikel ferner mindestens eine Füllung mit radialen Seiten umfasst, die von dem essbaren Kauartikel für Haustiere umgeben sind.

4. Verfahren zum Herstellen eines essbaren Kauartikels für Haustiere, wobei das Verfahren folgende Schritte umfasst: Herstellen einer Trockenmischung, die ein vorgelatiniertes Getreidemehl umfasst;
Dosieren der Trockenmischung in einen Extruder, der eine Extrusionsdüse umfasst;
Zugeben einer Wasserstoffbrücken bildenden Komponente zu der Trockenmischung, um einen Teig zu bilden;
Fördern von Keimbildung des Teigs, indem der Teig einer Kombination aus Scherung und Temperatur in einem an die Extrusionsdüse angrenzenden Abschnitt des Extruders ausgesetzt wird, um einen erhitzten und gescherten Teig zu bilden, wobei die Temperatur in dem an die Extrusionsdüse angrenzenden Abschnitt höher als eine Temperatur von mindestens einem vorherigen Abschnitt des Extruders ist; und
Leiten des erhitzten und gescherten Teigs durch eine Öffnung der Extrusionsdüse, die Rillen umfasst, wobei jede der Rillen ein offenes Ende und eine dem offenen Ende gegenüberliegende untere Oberfläche hat und die Breite der unteren Oberfläche größer als die Breite des offenen Endes ist.

5. Verfahren nach Anspruch 4, wobei die Rillen einen im Wesentlichen dreieckigen Querschnitt aufweisen.

6. Verfahren nach Anspruch 4, wobei die Rillen eine Breite aufweisen, die entlang der Rillen zur Mitte der Öffnung hin kontinuierlich abnimmt.

7. Verfahren nach Anspruch 4, wobei die Rillen entlang eines Innenumfangs der Öffnung der Extrusionsdüse gleichmäßig beabstandet sind.

8. Verfahren nach Anspruch 4, wobei die Temperatur in dem an die Extrusionsdüse angrenzenden Abschnitt des Extruders mindestens 120 °C beträgt.

9. Verfahren nach Anspruch 4, wobei die Wasserstoffbrücken bildende Komponente ein mehrwertiges Lösungsmittel umfasst.

10. Verfahren zum Herstellen eines essbaren Kauartikels für Haustiere, wobei das Verfahren folgende Schritte umfasst:
Bilden einer Trockenmischung, die ein vorgelatiniertes Getreidemehl umfasst;
Dosieren der Trockenmischung in einen Extruder, der eine Extrusionsdüse und einen Zylinder mit einer Entlüftung und einem Entlüftungsstopfen umfasst;
Zugeben einer Wasserstoffbrücken bildenden Komponente zu der Trockenmischung, um einen Teig zu bilden;
Verwenden eines Umkehrelements des Extruders, um eine Zeit zu verlängern, die der Teig in dem Zylinder verbringt, der die Entlüftung und den Entlüftungsstopfen umfasst;
Verwenden von Mischelementen in dem Zylinder, der die Entlüftung und den Entlüftungsstopfen umfasst, um den Teig zu schlagen und die Keimbildung des Teigs zu fördern; und
Fördern weiterer Keimbildung des Teigs, indem der Teig einer Kombination aus Scherung und Temperatur in einem Abschnitt des an die Extrusionsdüse angrenzenden Extruders ausgesetzt wird, um einen erhitzten und gescherten Teig zu bilden, wobei die Temperatur in dem an die Extrusionsdüse angrenzenden Abschnitt höher als eine Temperatur von mindestens einem vorherigen Abschnitt des Extruders ist.

11. Verfahren nach Anspruch 4 oder Anspruch 10, wobei das Verfahren das Zugeben von Bicarbonat zu der Trockenmischung umfasst, wobei die Trockenmischung zu 0,2 bis 1,5 Gew.-% das Natriumbicarbonat umfasst.

12. Verfahren nach Anspruch 10, das Belüften des Teigs in dem Zylinder umfasst, der die Entlüftung und den Entlüftungsstopfen umfasst.

13. Leckerli für Haustiere, umfassend:
einen essbaren Kauartikel für Haustiere nach einem der Ansprüche 1 bis 3; und eine oder mehrere Füllungen.

14. Nicht-therapeutische Verwendung eines essbaren Kauartikels für Haustiere nach einem der Ansprüche 1 bis 3 oder eines Leckerlis für Haustiere nach Anspruch 13 zum Reinigen von Zähnen eines Haustieres.

15. Essbarer Kauartikel für Haustiere nach einem der Ansprüche 1 bis 3 oder Leckerli für Haustiere nach Anspruch 13 zur Verwendung beim Verringern von Zahnsteinablagerungen auf Zähnen eines Haustieres.

## Revendications

1. Produit comestible à mâcher pour animal de compagnie comprenant une matrice de farine de céréale pré-gélatinisée expansée et ayant une surface extérieure sensiblement lisse de telle sorte qu'elle est essentiellement dépourvue d'ondulations, d'alvéoles et de bosses, et une masse volumique ne dépassant pas 1,0 Kg/L ; et dans lequel le produit à mâcher a une densité calorique de 1,5 à 2,7 Kcal/cm³.

2. Produit comestible à mâcher pour animal de compagnie selon la revendication 1 dans lequel la friandise à mâcher comprend un corps ayant une forme sensiblement cylindrique et comprend des crêtes radiales s'étendant à partir du corps, parallèles les unes aux autres le long d'au moins une partie de la longueur du corps.

3. Produit comestible à mâcher pour animal de compagnie selon la revendication 1, dans lequel la friandise à mâcher comprend en outre au moins un fourrage comprenant des côtés radiaux entourés par le produit comestible à mâcher pour animal de compagnie.

4. Procédé de fabrication d'un produit comestible à mâcher pour animal de compagnie, le procédé comprenant les étapes consistant à préparer un mélange sec comprenant une farine de céréale pré-gélatinisée ;
doser le mélange sec dans une extrudeuse comprenant une matrice d'extrusion ;
ajouter un composant de formation de liaison hydrogène au mélange sec pour former une pâte ;
promouvoir la nucléation de la pâte en soumettant la pâte à une combinaison de cisaillement et de température dans une section de l'extrudeuse adjacente à la matrice d'extrusion pour former une pâte chauffée et cisaillée, la température dans la section adjacente à la matrice d'extrusion est supérieure à une température d'au moins une section précédente de l'extrudeuse ; et
diriger la pâte chauffée et cisaillée à travers une ouverture de la matrice d'extrusion comprenant des rainures, chacune des rainures a une extrémité ouverte et une surface inférieure opposée à l'extrémité ouverte, et la largeur de la surface inférieure est supérieure à la largeur de l'extrémité ouverte.

5. Procédé selon la revendication 4 dans lequel les rainures ont une coupe transversale sensiblement triangulaire.

6. Procédé selon la revendication 4 dans lequel les rainures ont une largeur qui diminue de façon continue à mesure que les rainures s'étendent en direction du centre de l'ouverture.

7. Procédé selon la revendication 4 dans lequel les rainures sont uniformément espacées le long d'une périphérie interne de l'ouverture de la matrice d'extrusion.

8. Procédé selon la revendication 4 dans lequel la température dans la section de l'extrudeuse adjacente à la matrice d'extrusion est d'au moins 120 °C.

9. Procédé selon la revendication 4 dans lequel le composant de formation de liaison hydrogène comprend un solvant polyhydrique.

10. Procédé de fabrication d'un produit comestible à mâcher pour animal de compagnie, le procédé comprenant les étapes consistant à :
former un mélange sec comprenant une farine de céréale pré-gélatinisée ;
doser le mélange sec dans une extrudeuse comprenant une matrice d'extrusion et un cylindre comprenant une mise à l'air et un poussoir de mise à l'air ;
ajouter un composant de formation de liaison hydrogène au mélange sec pour former une pâte ;
utiliser un élément inversé de l'extrudeuse pour allonger un temps passé par la pâte dans le cylindre comprenant la mise à l'air et le poussoir de mise à l'air ;
utiliser des éléments de mélange dans le cylindre comprenant la mise à l'air et le poussoir de mise à l'air pour fouetter la pâte et promouvoir une nucléation de la pâte ; et
promouvoir encore la nucléation de la pâte en soumettant la pâte à une combinaison de cisaillement et de température dans une section de l'extrudeuse adjacente à la matrice d'extrusion pour former une pâte chauffée et cisaillée, la température dans la section adjacente à la matrice d'extrusion est supérieure à une température d'au moins une section précédente de l'extrudeuse.

11. Procédé selon la revendication 4 ou selon la revendication 10, dans lequel le procédé comprend l'ajout de bicarbonate au mélange sec dans lequel le mélange sec comprend 0,2 à 1,5 % en poids du bicarbonate de sodium.

12. Procédé selon la revendication 10 comprenant l'aération de la pâte dans le cylindre comprenant la mise à l'air et le poussoir de mise à l'air.

13. Friandise pour animal de compagnie comprenant :
un produit comestible à mâcher pour animal de compagnie selon l'une quelconque des revendications 1 à 3 ; et un ou plusieurs fourrages.

14. Utilisation non thérapeutique d'un produit comestible à mâcher pour animal de compagnie selon l'une quelconque des revendications 1 à 3 ou d'une friandise pour animal de compagnie selon la revendication 13 pour le nettoyage des dents d'un animal de compagnie.

15. Produit comestible à mâcher pour animal de compagnie selon l'une quelconque des revendications 1 à 3 ou friandise pour animal de compagnie selon la revendication 13 pour utilisation dans la réduction de l'accumulation de tartre sur les dents d'un animal de compagnie.
